# EUROPÄISCHE PATENTSCHRIFT

(11) **EP 2 235 728 B1**
(45) Veröffentlichungstag und Bekanntmachung des Hinweises auf die Patenterteilung: **10.06.2015**
(21) Anmeldenummer: 08868510.2
(22) Anmeldetag: 28.10.2008
(51) Int. Cl.: H01H 19/58

(54) **ELEKTRISCHER SCHALTER, INSBESONDERE PARKSTELLUNGSSCHALTER, FÜR EINEN ELEKTROMOTOR**
ELECTRIC SWITCH, PARTICULARLY PARK POSITION SWITCH, FOR AN ELECTRIC MOTOR
COMMUTATEUR ÉLECTRIQUE, EN PARTICULIER COMMUTATEUR D'ARRÊT FIXE, POUR UN MOTEUR ÉLECTRIQUE

(30) Priorität: 21.12.2007 DE 102007062257
(43) Veröffentlichungstag der Anmeldung: 06.10.2010
(73) Patentinhaber: Robert Bosch GmbH, 70442 Stuttgart (DE)
(72) Erfinder: HOLZER, Thomas, 74889 Sinsheim-Waldangelloch (DE); SAUM, Andreas, 77815 Buehl (DE)
(86) Internationale Anmeldenummer: PCT/EP2008/064581
(87) Internationale Veröffentlichungsnummer: WO 2009/083294

(56) Entgegenhaltungen:
- EP-A- 0 533 052
- DE-A1- 3 818 563

## Beschreibung

### Stand der Technik

Die Erfindung betrifft einen elektrischen Schalter für einen Elektromotor, insbesondere einen Parkstellungsschalter, mit einer um eine Drehachse drehbaren Mitnehmerscheibe aus elektrisch nicht leitendem Material, einer an der Mitnehmerscheibe fixierten, mit dieser gemeinsam umlaufenden Schaltscheibe aus elektrisch leitendem Material, die wenigstens einen zu kontaktierenden segmentartigen Bereich aufweist, und mit wenigstens einem auf die Umlaufbahn der segmentartigen Bereiche ausgerichteten Kontakt. Die Erfindung betrifft außerdem einen Wischerantrieb mit einem derartigen Schalter.

Ein derartiger Wischerantrieb ist bereits aus der DE 195 48 824 A1 und aus der EP-A-0533052 bekannt.

Elektrische Antriebsvorrichtungen für Scheibenwischer sind mit Schaltern versehen, die dafür sorgen, dass der Elektromotor der Antriebsvorrichtung auch nach Öffnen des Hauptschalters durch den Fahrer noch so lange mit Strom versorgt wird, bis der Scheibenwischer wieder in seine Ausgangsposition gelangt ist, die auch als Parkstellung bezeichnet wird. Dementsprechend wird der Schalter, der allgemein zur Erkennung von (End)positionen eines sich periodisch innerhalb eines bestimmten Winkelbereichs hin- und herbewegenden Elements geeignet ist, Parkstellungsschalter genannt.

Herkömmlicherweise werden die Parkstellungsschalter realisiert durch eine auf einem vom Motor angetriebenen Träger angeordnete Schaltscheibe (Kontaktscheibe), die drei konzentrische Kontaktbahnen aufweist, von denen typischerweise zwei jeweils durch mindestens eine Lücke beziehungsweise Ausnehmung unterbrochen sind. Dabei läuft bei sich drehendem Träger auf jeder Bahn ein punktförmiges Kontaktelement (Schleifkontakt) um, das - auf den zu kontaktierenden segmentartigen Bereichen der Kontaktbahn, also außerhalb der Lücken, - eine elektrisch leitende Verbindung zur Kontaktbahn herstellt, also den Schalter schließt. Auf den Lückensegmenten der jeweiligen Kontaktbahn ist hingegen keine elektrische Verbindung hergestellt, so dass der Schalter geöffnet ist, wenn der Motor, beziehungsweise die an seine Bewegung angekoppelte Schaltscheibe und damit das betreffende Lückensegment, sich an der entsprechenden Position befindet.

Derartige Schalter, deren Schaltscheibe eine ringförmige, jedoch durch Ausnehmungen beziehungsweise Lückensegmente durchbrochene Struktur aus elektrisch leitendem Material, typischerweise Metallblech, aufweist und auf einem Träger aus Kunststoff aufliegt, sind zum Beispiel aus der DE 41 30 972 C2 bekannt. Häufig sind die Kontaktbahnen bzw. die Schaltscheibe fest auf dem als Träger dienenden Abtriebszahnrad der Antriebswelle des Wischermotors angeordnet oder damit verbunden, während die Schleifkontakte gehäusefest, insbesondere am Getriebedeckel, ausgebildet sind. Das Prinzip lässt sich aber auch dann anwenden, wenn die Kontaktbahnen gehäusefest und die Schleifkontakte drehbar im Gehäuse ausgebildet sind.

Bei dieser Anordnung, bei der ein Element, typischerweise die mit dem Träger rotierenden Kontaktbahnen, des Parkstellungsschalters fest mit der Abtriebswelle verbunden ist, tritt jedoch das Problem auf, dass das Scheibenwischerblatt durch äußere Einflüsse, z. B. durch Schnee auf der Windschutzscheibe, daran gehindert werden kann, in seine Parkstellung zu gelangen. Da aber die Abtriebswelle so lange vom Motor angetrieben wird, bis sie eine Winkellage eingenommen hat, die der Parkstellung des Wischblattes bei ungehinderter Bewegung entspricht, wird der Wischarm und das Wischblatt bogenförmig verspannt, indem sie sich am Hindernis abstützen. Sobald der Motor selbsttätig abschaltet, bewirkt der sich entspannende Wischer, dass die Abtriebswelle zurückgedreht wird. Dies hat zur Folge, dass der Parkstellungsschalter erneut geschlossen und der Motor mit Strom versorgt wird. Dies führt dazu, dass der Wischer wieder gegen das Hindernis gefahren und erneut eine mechanische Spannung aufgebaut wird. Dieser Vorgang wiederholt sich so lange, bis das Hindernis beseitigt ist oder der Motor aufgrund von Getriebeschaden ausfällt. Ersichtlich wirken dabei erhebliche Belastungen auf das Getriebe, die dessen Lebensdauer herabsetzen.

Zur Behebung dieses Problems ist aus der eingangs genannten, gattungsgemäßen Offenlegungsschrift bereits eine Antriebsvorrichtung bekannt, deren Parkstellungsschalter mit einer Schneelastsicherung ausgestattet ist. Dabei ist der Parkstellungsschalter durch eine Mitnahmeeinrichtung in Form einer Scheibe ergänzt, so dass die drehbar gelagerten Kontaktbahnen nicht mehr fest, sondern über eine Kupplung mit dem Abtriebszahnrad verbunden sind. Diese Kupplung ist derart ausgebildet, dass die Abtriebswelle im normalen Betrieb, bei dem der Wischer pendelnd angetrieben wird, die Mitnehmerscheibe zusammen mit den an ihr fixierten Kontakten (Schaltscheibe) mitnimmt, so dass der Parkstellungsschalter wie ein Parkstellungsschalter arbeitet, dessen Schaltscheibe fest mit der Abtriebswelle verbunden ist. Wenn aber der oben erläuterte Fall eintritt, bei dem die Abtriebswelle, beispielsweise auch durch Windkraft, gegen ihre eigentliche Drehrichtung zurückgestellt wird, wird die Mitnehmerscheibe beziehungsweise die an ihr fixierte Schaltscheibe nicht mitgenommen, so dass der Parkstellungsschalter, der den Motor andernfalls erneut mit Strom versorgen würde, nicht geschlossen wird.

Unabhängig von der weiteren Funktionalität des Trägers der Schaltscheibe laufen die Schleifkontakte auf ihren jeweiligen Umlaufbahnen jedenfalls abwechselnd auf einem zu kontaktierenden segmentartigen Bereich der Schaltscheibe und auf den daran anschließenden, durch das Kunststoffmaterial des Trägers (Abtriebszahnrad oder Mitnehmerscheibe) der Schaltscheibe gebildeten Bereichen. Damit die Umlaufbahn in allen Segmenten auf gleicher Höhe liegt, wird dabei in der Regel die Schaltscheibe in die Negativform der Trägeroberseite gefügt. Da die Schleifkontakte abwechselnd auf zwei Materialpartnern laufen, müssen diese zwei Teile (Träger und leitende Schaltscheibe) miteinander gepaart und verbunden werden und zwar so, dass nach dem Fügeprozess beide Teile - bezogen auf die Schleifkontakte - möglichst auf einer Ebene liegen. Bedingt durch Toleranzen ist dies nicht immer ideal zu erreichen. In der Folge kommt es zu einem erhöhten mechanischen Verschleiß der Kontakte, zu Klack-Geräuschen und zu Prellen, also zu einer verschlechterten Signalgüte. Darüber hinaus sind für jede neue Geometrie der Schaltscheibe neben neuen Schaltscheiben auch neue Mitnehmerscheibenoberseiten mit entsprechenden Negativkonturen erforderlich, was mit einer aufwendigen Teilevielfalt und erhöhten Werkzeugkosten verbunden ist. Außerdem muss die Schaltscheibe als zusätzliches Bauteil auf die Mitnehmerscheibe montiert werden, wobei der Kontaktwinkel der Schaltscheibe im Stanzprozess der Schaltscheibe realisiert wird. Ferner sind für die Montage der Schaltscheibe Bohrungen in der Mitnehmerscheibe erforderlich und die Schaltscheibe kann bei der Montage einem Biegeprozess unterliegen.

### Offenbarung der Erfindung

Der erfindungsgemäße elektrische Schalter ist in Anspruch 1 gekennzeichnet. Ein erfindungsgemäßer Wischerantrieb mit einem derartigen Schalter ist in Anspruch 7 gekennzeichnet. Weiterbildungen und bevorzugte Maßnahmen ergeben sich aus den Unteransprüchen.

Bei dem erfindungsgemäßen elektrischen Schalter ist, über die gattungsgemäßen Merkmale hinaus, vorgesehen, dass die Schaltscheibe derart in die Mitnehmerscheibe eingebettet ist, dass die Schaltscheibe bis auf die zu kontaktierenden segmentartigen Bereiche vom Material der Mitnehmerscheibe umschlossen ist.

Die während der Umlaufbahn zu kontaktierenden beziehungsweise nicht zu kontaktierenden Segmente der Kontaktbahnen werden demnach nicht mehr wie im Stand der Technik durch eine strukturierte Ausbildung der Schaltscheibe selbst, sondern durch die - in bestimmten Segmenten aufgehobene beziehungsweise unterbrochene - Integration einer Schaltscheibe mit unstrukturierten, ringförmig geschlossenen Kontaktbahnen in die Mitnehmerscheibe realisiert. Durch den Wegfall der Biegeprozesse der Schaltscheibe und des nachträglichen Montageprozesses resultiert eine Kostenoptimierung und Bauteiloptimierung. Letzteres auch wegen der Erhöhung der mechanischen Festigkeit der Mitnehmerscheibe durch Entfall der Befestigungsbohrungen für die Montage der Schaltscheibe. Die Erfindung ermöglicht auch, die Schaltscheibe in Form eines vereinfachten Stanzteils bereitzustellen, da eine erforderliche Variation der Segmentstruktur der Schaltscheibe durch eine Variation der Einbettungsstruktur realisierbar ist.

Bei einer herstellungstechnisch vorteilhaften Ausführungsform der Erfindung besteht die Mitnehmerscheibe aus Kunststoff, wobei die Schaltscheibe durch Spritzgießen in die Mitnehmerscheibe eingebettet ist. Die gewünschte Einbettungsstruktur ist dann mit üblichen, spritztechnisch wenig aufwändigen Mitteln implementierbar.

Gemäß einer als besonders vorteilhaft angesehenen weiteren Ausführungsform der Erfindung sind die Übergänge von den zu kontaktierenden segmentartigen Bereichen zu den benachbarten, durch das Material der Mitnehmerscheibe gebildeten Bereichen der Umlaufbahn als bezüglich des Höhenniveaus weiche Übergänge ausgebildet. Hinsichtlich der Qualität ergibt sich der Vorteil, dass die Schleifer, die möglichst auf einer Ebene laufen sollen, nicht mehr von den Toleranzen des Systems Schaltscheibe/Träger abhängig sind. Damit resultiert ein verringerter Verschleiß/Abrieb beziehungsweise Prellen, wodurch sich eine bessere Signalgüte beziehungsweise eine Robustheitssteigerung ergibt. Durch den sanften Übergang beim Umlauf auf den Kontaktbahnen resultiert auch die Vermeidung von Klack-Geräuschen, also eine Geräuschoptimierung. In besonders vorteilhafter Weise können die weichen Übergänge gemäß einer Weiterbildung der erwähnten Ausführungsform mithilfe einer Rampengeometrie im Kunststoffmaterial der Mitnehmerscheibe realisiert sein.

Vorteilhafterweise weist die Schaltscheibe wenigstens annähernd die Form einer geschlossenen und lückenlosen Ringscheibe auf, d.h. es sind keine unterschiedlichen Stanzwerkzeuge für die Herstellung der Varianten der Schaltscheibe erforderlich.

Der erfindungsgemäße Wischerantrieb für ein Kraftfahrzeug umfasst einen elektrischen Schalter, insbesondere einen Parkstellungsschalter, der oben beschriebenen Art.

### Kurze Beschreibung der Zeichnungen

Figur 1 zeigt eine schematische Draufsicht auf eine aus dem Stand der Technik bekannte, mit Ausnehmungen versehene Schaltscheibe eines Parkstellungsschalters,
Figur 2 zeigt einen Querschnitt entlang eines Durchmessers der erfindungsgemäßen Mitnehmerscheibe mit integrierter Schaltscheibe,
Figur 3 zeigt einen zu den Stirnflächen der erfindungsgemäßen Mitnehmerscheibe parallelen Querschnitt,
Figur 4 zeigt einen Schnitt des erfindungsgemäßen Schalters entlang der Linie A-A aus Figur 3,
Figur 5 zeigt einen Querschnitt durch einen schematisch dargestellten erfindungsgemäßen Wischerantrieb mit Parkstellungsschalter.

### Ausführungsform der Erfindung

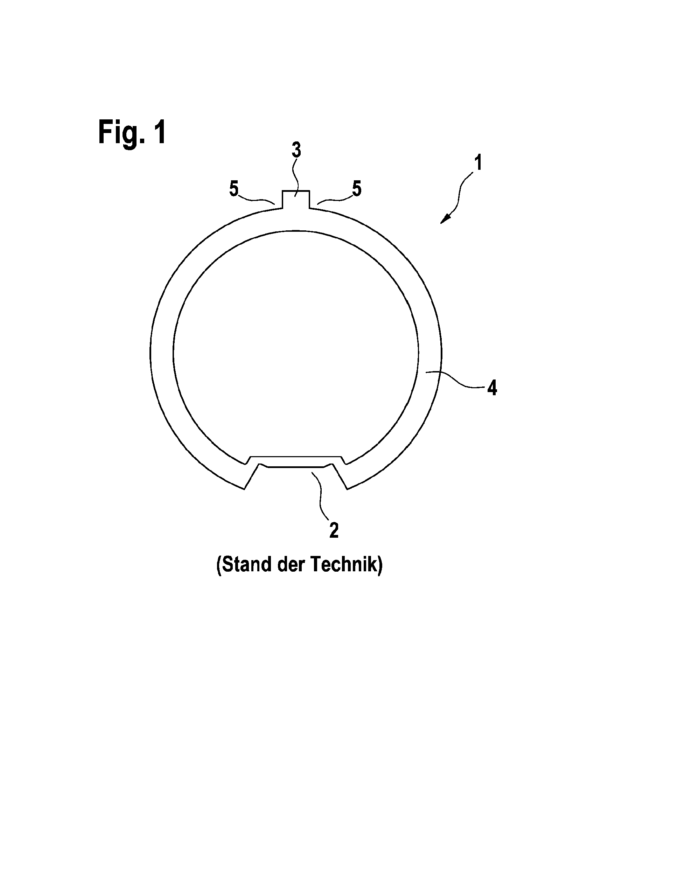

In Figur 1 ist eine aus dem Stand der Technik bekannte, üblicherweise als Blechstanzteil hergestellte Schaltscheibe 1 dargestellt, die für einen Parkstellungsschalter einer Antriebsvorrichtung eines Kfz-Scheibenwischers verwendet werden kann. Die bekannte Schaltscheibe 1 ist teilweise ringförmig ausgebildet, weist jedoch eine segmentartige Lücke bzw. Ausnehmung 2 und, gegenüberliegend, einen kurzen vorspringenden zu kontaktierenden Sektor 3 auf. Ein für die innere Umlaufbahn vorgesehener (nicht dargestellter) Schleifkontakt bewegt sich also, außer im Bereich der Lücke 2, auf dem Metallblech des segmentartigen Bereichs 4 der Schaltscheibe 1, während ein für die äußere Umlaufbahn vorgesehener weiterer Schleifkontakt nur sehr kurz, nämlich über dem zu kontaktierenden Sektor 3, auf der Schaltscheibe 1 läuft, während der gesamte Rest der zugehörigen Umlaufbahn als Lücke 5 ausgebildet ist. Diese bekannte Schaltscheibe aus leitendem Material kann auf die Oberseite des elektrisch nicht leitenden Kunststoffmaterials einer an sich bekannten Mitnehmerscheibe eingelegt werden. Die Schleifkontakte laufen dann auf ihren jeweiligen Umlaufbahnen abwechselnd über der Schaltscheibe 1 und dem daran anschließenden Kunststoffmaterial der Mitnehmerscheibe und leiten dementsprechend ein Signal, wenn die Schleifer sich auf der leitenden Kontaktscheibe 1 befinden, bzw. unterbrechen das Signal, wenn die Schleifkontakte auf der Mitnehmerscheibe laufen. In der Regel wird dabei die Schaltscheibe in die Negativform der Oberseite der Mitnehmerscheibe gefügt.

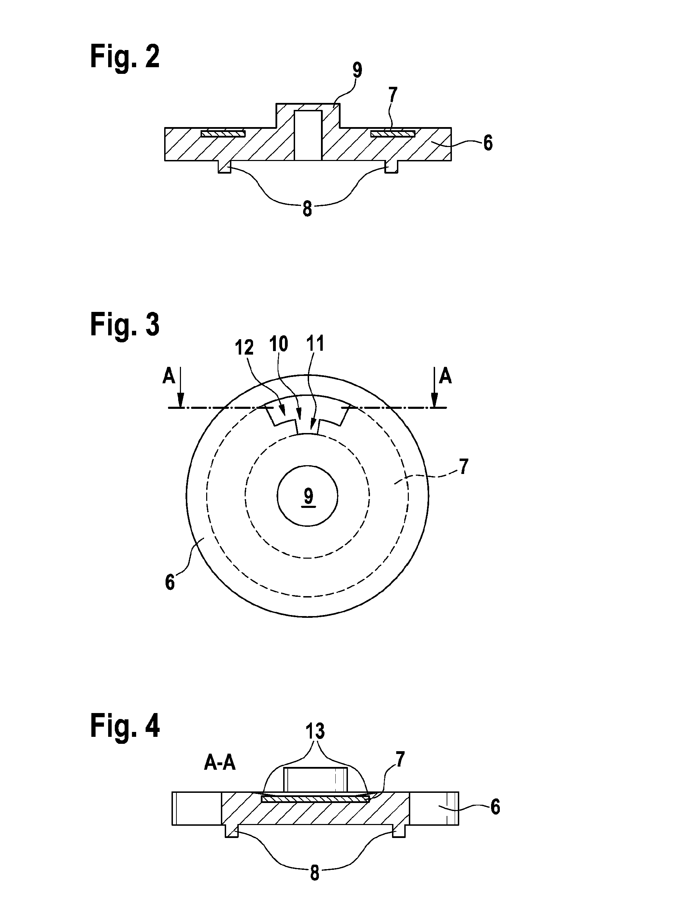

In Figur 2 ist eine erfindungsgemäße Mitnehmerscheibe 6 mit integrierter Schaltscheibe 7 dargestellt. Letztere weist die Form einer lückenlosen Ringscheibe auf und ist in Spritzmontagetechnik hergestellt. Dabei wird die Schaltscheibe 7 in an sich bekannter Weise in eine offene Spritzform für die Mitnehmerscheibe 6 eingelegt und mit Kunststoff umspritzt. Die einfache Struktur der Mitnehmerscheibe 6, deren Funktionen im Wesentlichen auf ihrer Oberseiten-Ebene ausgebildet sind, ermöglicht einen unkomplizierten Spritzguss. Erkennbar in Figur 2 sind außerdem zwei Mitnehmer 8 und eine Lagerung 9, um die herum die Mitnehmerscheibe 6 in eine Drehrichtung drehbar ist. Aus der Darstellung gemäß Figur 2 geht ferner bereits hervor, dass Teile der Schaltscheibe 7 auch zur Oberseite der Mitnehmerscheibe 6 hin von deren Kunststoffmaterial umschlossen sind, während andere Teile der Schaltscheibe 7 zur Oberseite der Mitnehmerscheibe 6 hin offen liegen.

Figur 3 zeigt die lückenlose Ringsscheibe 7, deren überwiegender, schwarz dargestellter Teil (Segment) allseitig vom Kunststoffmaterial der Mitnehmerscheibe 6 umgeben ist. Bewegt sich ein Schleifkontakt auf einer Umlaufbahn, so kommt er - wie vorgesehen - beim Umlauf über dieses, nicht zu kontaktierende Segment nur mit dem Kunststoff der Mitnehmerscheibe 6 in Berührung. Nur im segmentartigen Bereich 10 der Schaltscheibe 7 ist eine Kontaktierung während des Umlaufs dieses Segmentes vorgesehen. In diesem Bereich 10 ist die Schaltscheibe 7 deshalb nicht vom Kunststoff der Mitnehmerscheibe 6 überdeckt - das Segment 10 wurde beim Umspritzen ausgespart. Wie erkennbar, ist der segmentartige Bereich 10 - durch die Formgebung bei der Umspritzung - so strukturiert, dass sich ein Segment 11 bezüglich einer inneren Kontaktbahn sowie ein weiteres Segment 12 bezüglich einer äußeren Kontaktbahn ergibt.

Figur 4 zeigt beispielshalber, wie die Übergänge von den zu kontaktierenden segmentartigen Bereichen 10 zu den benachbarten, durch das Material der Mitnehmerscheibe 6 gebildeten Bereichen der Umlaufbahn vorteilhaft als bezüglich des Höhenniveaus weiche Übergänge ausgebildet sind. Beim Umspritzen der Schaltscheibe 7 können die weichen Übergänge mithilfe einer Rampengeometrie 13 im Kunststoffmaterial der Mitnehmerscheibe 6 besonders vorteilhaft mitgespritzt werden.

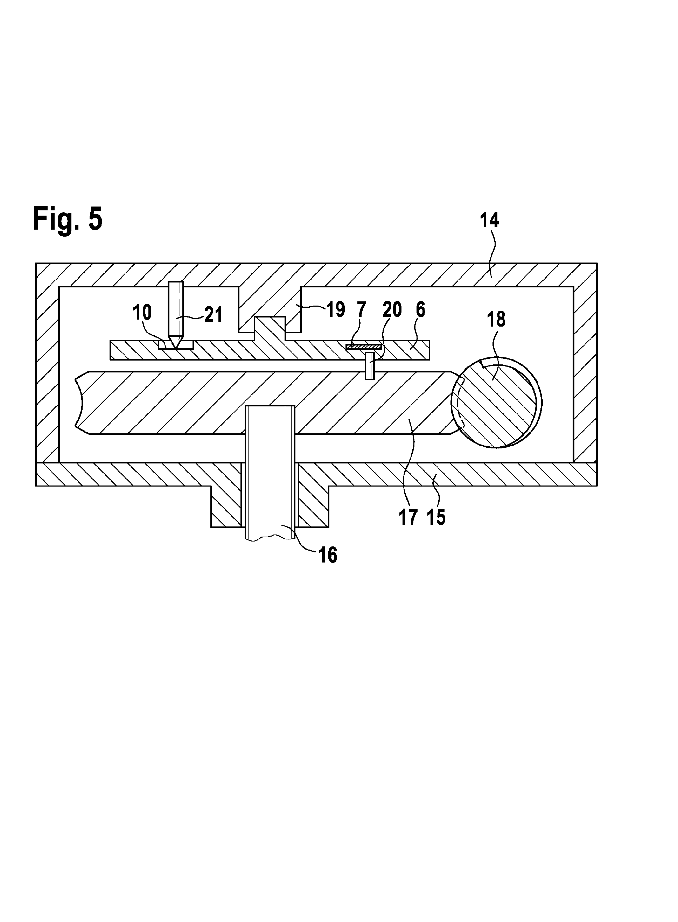

Figur 5 zeigt schematisch den Aufbau eines erfindungsgemäßen Wischerantriebs mit Parkstellungsschalter. Dargestellt ist ein Getriebegehäuse, das nach oben hin durch einen topfähnlichen Getriebedeckel 14 verschlossen ist. Durch den Boden 15 des Gehäuses erstreckt sich eine Abtriebswelle 16, auf deren Ende, das in das Gehäuse hineinragt, ein Abtriebszahnrad 17 aus Kunststoff befestigt ist. Das Abtriebszahnrad 17 entspricht in seiner radialen Ausdehnung in etwa dem Innendurchmesser des Gehäuses. In der Außenverzahnung des Abtriebszahnrades 17 kämmt eine Schnecke 18, die in unmittelbarer Verlängerung der Ankerwelle des nicht dargestellten Antriebsmotors ausgebildet ist.

Der Getriebedeckel 14 kann aus Kunststoff bestehen, an den eine sich in axialer Richtung in das Innere des Gehäuses erstreckende Lagerung 19 für die Mitnehmerscheibe 6 angeformt ist. Die Lagerung 19 für die Mitnehmerscheibe 6 kann von der dargestellten beispielhaften Ausbildung stark abweichen. Die Mitnehmerscheibe 6 ist in an sich bekannter Weise, beispielsweise über eine Mitnehmernase 20, am Abtriebszahnrad 17 und eine entsprechende Nut an der Unterseite der Mitnehmerscheibe 6, oder umgekehrt, so an das Abtriebszahnrad 17 gekuppelt, dass bei einer Drehung der Abtriebswelle 16 in die eine Richtung die Mitnehmerscheibe 6 - und damit die dort integrierten, also relativ zum Getriebedeckel 14 drehbar gelagerten Kontaktbahnen der Schaltscheibe 7 - mitgenommen und bei einer Drehung der Welle 16 in die andere Richtung die Mitnehmerscheibe 6 nicht mitgenommen wird. Ein Schleifkontakt 21 kontaktiert die umlaufenden freiliegenden segmentartigen Bereiche 10 der Schaltscheibe 7 und schleift im weiteren Umlauf auf dem Kunststoff der Mitnehmerscheibe 6.

## Patentansprüche

1. Elektrischer Schalter, insbesondere Parkstellungsschalter, für einen Elektromotor, mit einer um eine Drehachse drehbaren Mitnehmerscheibe (6) aus elektrisch nicht leitendem Material, einer an der Mitnehmerscheibe (6) fixierten, mit dieser gemeinsam umlaufenden Schaltscheibe (7) aus elektrisch leitendem Material, die wenigstens einen zu kontaktierenden segmentartigen Bereich (10) aufweist, und mit wenigstens einem auf die Umlaufbahn der segmentartigen Bereiche (10) ausgerichteten Kontakt (21), **dadurch gekennzeichnet,**
**dass** die Schaltscheibe (7) derart in die Mitnehmerscheibe (6) eingebettet ist, dass die Schaltscheibe (7) bis auf die zu kontaktierenden segmentartigen Bereiche (10) vom Material der Mitnehmerscheibe (6) umschlossen ist.

2. Elektrischer Schalter nach Anspruch 1, **dadurch gekennzeichnet, dass** die Mitnehmerscheibe (6) aus Kunststoff besteht, und dass die Schaltscheibe (7) durch Spritzgießen in die Mitnehmerscheibe (6) eingebettet ist.

3. Elektrischer Schalter nach Anspruch 1 oder 2, **dadurch gekennzeichnet, dass** die Übergänge von den zu kontaktierenden segmentartigen Bereichen (10) zu den benachbarten, durch das Material der Mitnehmerscheibe (6) gebildeten Bereichen der Umlaufbahn als weiche Übergänge bezüglich des Höhenniveaus ausgebildet sind.

4. Elektrischer Schalter nach Anspruch 3, **dadurch gekennzeichnet, dass** die weichen Übergänge mithilfe einer Rampengeometrie (13) im Kunststoffmaterial der Mitnehmerscheibe (6) realisiert sind.

5. Elektrischer Schalter nach einem der Ansprüche 1 bis 4, **dadurch gekennzeichnet, dass** zwei oder drei Schleifkontakte (21) vorgesehen und jeweils auf eine der konzentrisch zur Drehachse der Schaltscheibe (7) angeordneten Umlaufbahnen ausgerichtet sind.

6. Elektrischer Schalter nach einem der Ansprüche 1 bis 5, **dadurch gekennzeichnet, dass** die Schaltscheibe (7) wenigstens annähernd die Form einer geschlossenen und lückenlosen Ringscheibe aufweist.

7. Antriebsvorrichtung für einen Scheibenwischer mit einem elektrischen Schalter nach einem der Ansprüche 1 bis 6.

## Claims

1. Electrical switch, in particular park position switch, for an electric motor, having a driver disc (6) which can rotate about a rotation axis and is composed of electrically non-conductive material, having a switching disc (7) which is fixed to the driver disc (6), rotates together with the said driver disc and is composed of electrically conductive material and which has at least one segment-like region (10) with which contact is to be made, and having at least one contact (21) which is oriented toward the rotation path of the segment-like regions (10), **characterized in that** the switching disc (7) is embedded in the driver disc (6) in such a way that the switching disc (7), apart from the segment-like regions (10) with which contact is to be made, is enclosed by the material of the driver disc (6).

2. Electrical switch according to Claim 1, **characterized in that** the driver disc (6) is composed of plastic, and **in that** the switching disc (7) is embedded in the driver disc (6) by injection moulding.

3. Electrical switch according to Claim 1 or 2, **characterized in that** the transitions from the segment-like regions (10), with which contact is to be made, to the adjacent regions of the rotation path which are formed by the material of the driver disc (6) are designed as smooth transitions in respect of the height level.

4. Electrical switch according to Claim 3, **characterized in that** the smooth transitions are realized with the aid of a ramp geometry (13) in the plastic material of the driver disc (6).

5. Electrical switch according to one of Claims 1 to 4, **characterized in that** two or three sliding contacts (21) are provided, and in each case oriented toward one of the rotation paths which are arranged concentrically in relation to the rotation axis of the switching disc (7).

6. Electrical switch according to one of Claims 1 to 5, **characterized in that** the switching disc (7) at least approximately has the shape of a closed and continuous annular disc.

7. Drive apparatus for a windscreen wiper, having an electrical switch according to one of Claims 1 to 6.

## Revendications

1. Commutateur électrique, notamment commutateur de position de stationnement, pour un moteur électrique, comprenant un disque d'entraînement (6) en matériau non conducteur d'électricité pouvant tourner autour d'un axe de rotation, un disque de commutation (7) en matériau électriquement conducteur fixé au disque d'entraînement (6) et tournant conjointement avec celui-ci, lequel présente au moins une zone de type segment (10) avec laquelle établir le contact, et comprenant au moins un contact (21) orienté vers la trajectoire de rotation des zones de type segment (10), **caractérisé en ce que** le disque de commutation (7) est incorporé dans le disque d'entraînement (6) de telle sorte que le disque de commutation (7) est entouré par le matériau du disque d'entraînement (6) jusqu'aux zones de type segment (10) avec lesquelles établir le contact.

2. Commutateur électrique selon la revendication 1, **caractérisé en ce que** le disque d'entraînement (6) se compose de matière plastique et **en ce que** le disque de commutation (7) est incorporé dans le disque d'entraînement (6) par moulage par injection.

3. Commutateur électrique selon la revendication 1 ou 2, **caractérisé en ce que** les transitions des zones de type segment (10) avec lesquelles établir le contact vers les zones voisines de la trajectoire de rotation, formées par le matériau du disque d'entraînement (6), sont réalisées sous la forme de transitions en douceur pour ce qui concerne le niveau de hauteur.

4. Commutateur électrique selon la revendication 3, **caractérisé en ce que** les transitions en douceur sont réalisées à l'aide d'une géométrie en rampe (13) dans la matière plastique du disque d'entraînement (6).

5. Commutateur électrique selon l'une des revendications 1 à 4, **caractérisé en ce que** sont prévus deux ou trois contacts à frottement (21) qui sont orientés respectivement vers l'une des trajectoires de rotation disposées de manière concentrique par rapport à l'axe de rotation du disque de commutation (7).

6. Commutateur électrique selon l'une des revendications 1 à 5, **caractérisé en ce que** le disque de commutation (7) présente au moins approximativement la forme d'un disque annulaire fermé et continu.

7. Dispositif d'entraînement pour un essuie-glace équipé d'un commutateur électrique selon l'une des revendications 1 à 6.
